(19)

Europäisches Patentamt
European Patent Office
Office européen des brevets

(11) **EP 2 374 236 B1**

(12) **EUROPEAN PATENT SPECIFICATION**

(45) Date of publication and mention
of the grant of the patent:
**12.04.2017 Bulletin 2017/15**

(21) Application number: **10726859.1**

(22) Date of filing: **05.01.2010**

(51) Int Cl.:
*H04B 1/713* (2011.01)          *H04L 1/18* (2006.01)
*H04J 13/00* (2011.01)

(86) International application number:
**PCT/US2010/020168**

(87) International publication number:
**WO 2010/078602 (08.07.2010 Gazette 2010/27)**

(54) **HANDLING HYBRID AUTOMATIC REPEATS REQUESTS IN WIRELESS SYSTEMS**

HARQ-VERWALTUNG IN DRAHTLOSEN SYSTEMEN

TRAITEMENT DE REQUÊTES DE RÉPÉTITIONS AUTOMATIQUES HYBRIDES (HARQ) DANS DES SYSTÈMES SANS FIL

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **05.01.2009 US 142582 P**
**16.12.2009 US 639078**

(43) Date of publication of application:
**12.10.2011 Bulletin 2011/41**

(73) Proprietor: **Intel Corporation**
**Santa Clara, CA 95054 (US)**

(72) Inventors:
• **ZHU, Yuan**
**Beijing 100012 (CN)**
• **LI, Qinghua**
**San Ramon, California 94582 (US)**
• **XU, Changlong**
**Beijing 100190 (CN)**
• **SUN, Hongmei**
**Beijing 100080 (CN)**

• **YIN, Hujun**
**Saratoga, California 95070 (US)**

(74) Representative: **HGF Limited**
**Fountain Precinct**
**Balm Green**
**Sheffield S1 2JA (GB)**

(56) References cited:
**EP-A2- 1 863 215          EP-A2- 1 863 215**
**KR-B1- 100 860 663          US-A1- 2007 097 927**
**US-A1- 2007 263 702          US-A1- 2008 025 285**
**US-A1- 2008 165 743**

• **NOKIA ET AL: "Data-non-associated control signal transmission without UL data", 3GPP DRAFT; R1-071676, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. St. Julian; 20070403, 3 April 2007 (2007-04-03), XP050105599, [retrieved on 2007-04-03]**

**Description**

Background

This relates generally to wireless communications and, particularly, to the use of hybrid automatic repeat requests (HARQ) in wireless systems.

In order to reduce errors in communications between base stations and mobile stations in wireless networks, the mobile station sends a response to signals it receives to indicate whether or not there were errors in the received signal. The communication channel from the base station to the mobile station, called the downlink, may include hybrid automatic repeat request (HARQ) packets. The channel from the mobile station to the base station, called the uplink, provides either an acknowledgement (ACK) or a negative acknowledgement (NAK) if errors were contained in the transmission.

Basically, in HARQ, error detection information bits are added to the data to be transmitted. Based on these bits, the mobile station can determine whether it received the information transmitted from the base station correctly. It sends an acknowledgement if it did receive them correctly and a negative acknowledgement if it did not.

A HARQ region is designed using three distributed feedback mini-tile (FMT), each having two sub-carriers by six Orthogonal Frequency Division Multiplexing (OFDM) symbols. A code division multiplexed based method has been proposed, but it has been found that a pure code division multiplexed based approach may have error floors for high mobility scenarios, especially with parallel multi-user transmissions. A time division multiplexed/ frequency division multiplexed based method has also been proposed. In time division multiplexed/frequency division multiplexed designs, one HARQ feedback region is split into six orthogonal HARQ feedback channels using time division or frequency division multiplexing. Each HARQ feedback channel includes three units having one sub-carrier by two OFDM symbols. An orthogonal sequence of length two may be used to convey the one bit acknowledge negative acknowledge information. The time division/frequency division multiplexing design can overcome the error floor in high mobility scenarios. Moreover, the performance is robust to mobile station moving speed.

A hybrid time division, frequency division, code division multiplexing method can achieve similar performance and also is robust to high mobility. However, the major drawback to time division/frequency division multiplexed designs is that the distributed transmission power in the original design concentrates on three tiles and, thus, may cause interference to other cells.

Nokia et al: "Data-non-assisted control signal transmission without UL data"; 3GPP Draft; R1-071676, 3rd Generation Partnership Project (3GPP), Mobile Competence Centre; Sophia-Antipolis, France, vol. RAN WG1, no. St Julian; 20070403, 3rd April 2007 refers to control signalling, such as ACK/NACK and CQI, in an uplink using a reserved frequency and time resource.

US 2007/097927 refers to a signalling channel which punctures traffic channels to send acknowledgements in which signals for the signalling channel are based on a frequency hopping pattern.

EP 1 863 215 refers to allocation of frequency resources for multiple terminals in an FDM wireless communication system with frequency hopping between a first transmission and a second transmission.

US 2008/165743 refers to allocating and mapping resources in a wireless communication system which may use hop-ports to facilitate allocation and use of sub-carriers.

According to a first aspect of the invention, there is provided a method as claimed in claim 1.

According to a second aspect of the invention, there is provided a computer readable medium storing instructions to enable a computer to perform the method as claimed in claim 7.

According to a third aspect of the invention, there is provided a mobile station as claimed in claim 8.

Further embodiments of the invention are included in the dependent claims.

Brief Description of the Drawings

Figure 1 is a schematic depiction of one embodiment;

Figure 2 is a time division/frequency division design of an HARQ feedback channel in accordance with one embodiment;

Figure 3 is a time division/frequency division multiplexed design of an HARQ feedback channel in accordance with another embodiment;

Figure 4 is a time division/frequency division/code division multiplexing design of an HARQ feedback channel in accordance with still another embodiment;

Figure 5 is a flow chart for interference randomization in accordance with one embodiment;

Figure 6 is an HARQ channel sub-carrier indexing scheme in accordance with one embodiment; and

Figure 7 is a depiction of an exemplary 19 cell network with each cell having three sectors, α, β and γ.

Detailed Description

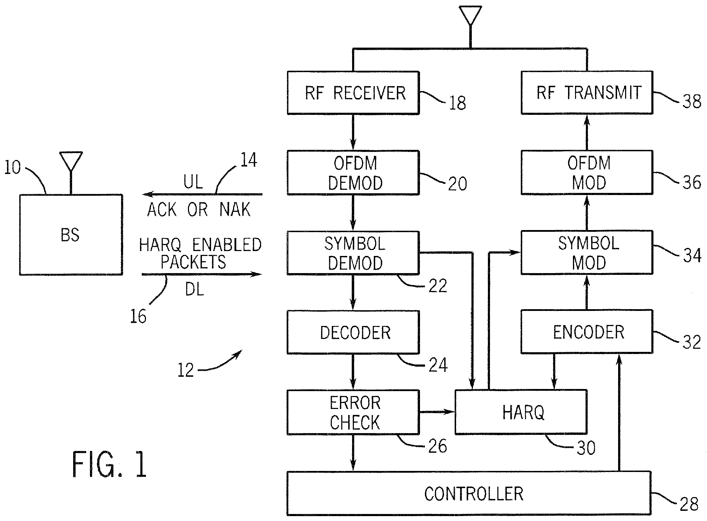

Referring to Figure 1, a base station 10 may provide HARQ enabled packets over a downlink channel 16 to a mobile station 12. The mobile station 12 may provide an uplink acknowledge channel 14, which provides either an acknowledge (ACK) or a negative acknowledge (NAK).

The mobile station 12 may include a radio frequency receiver 18, coupled to an OFDM demodulator 20. The OFDM demodulator may be coupled to a symbol demodulator 22, which may handle sub-carrier de-mapping. The symbol demodulator 22 may be coupled to an HARQ buffer 30. It may also be coupled to a decoder 24. An error check 26 determines whether there is an error in the HARQ enabled packets received on the downlink channel 16 and communicates with the HARQ buffer 30 to so indicate, as well as the controller 28.

On the transmit side, the controller 28 communicates with an encoder 32 and also communicates with the HARQ buffer 30. The encoder 32 is coupled to a symbol modulator 34 that also handles sub-carrier mapping. The symbol modulator is coupled to an OFDM modulator 36 that, in turn, is coupled to an RF transmitter 38.

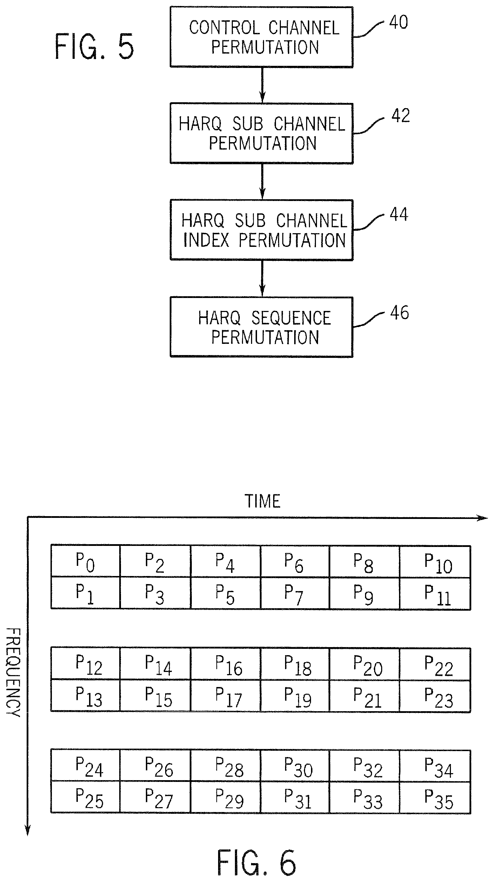

In accordance with some embodiments of the present invention, the cell interference is randomized in order to ensure robust performance in multi-cell operation scenarios as indicated in Figure 5. Interference can be randomized on several levels. The first level (Figure 5, block 40) may be in the HARQ region permutation, in which the tiles of different sectors may be permuted to different physical frequency-time locations. The permutation is cell specific and can hop with time to avoid constant collisions.

Since the time division (TDM)/frequency division (FDM)multiplexing or time division/frequency division/code division (CDM) multiplexing method is applied to the uplink HARQ feedback region, the second level may be inside the uplink HARQ feedback region (Figure 5, block 42). This may include varying the HARQ acknowledge channel mapping, the HARQ acknowledge channel indexing (Figure 5, block 44), and the HARQ acknowledge channel sequence (Figure 5, block 46).

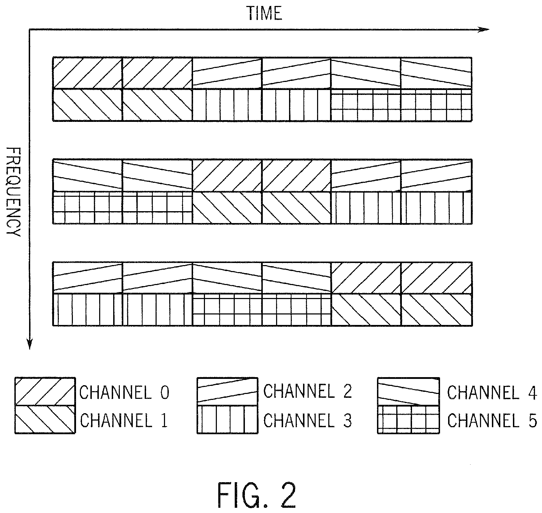

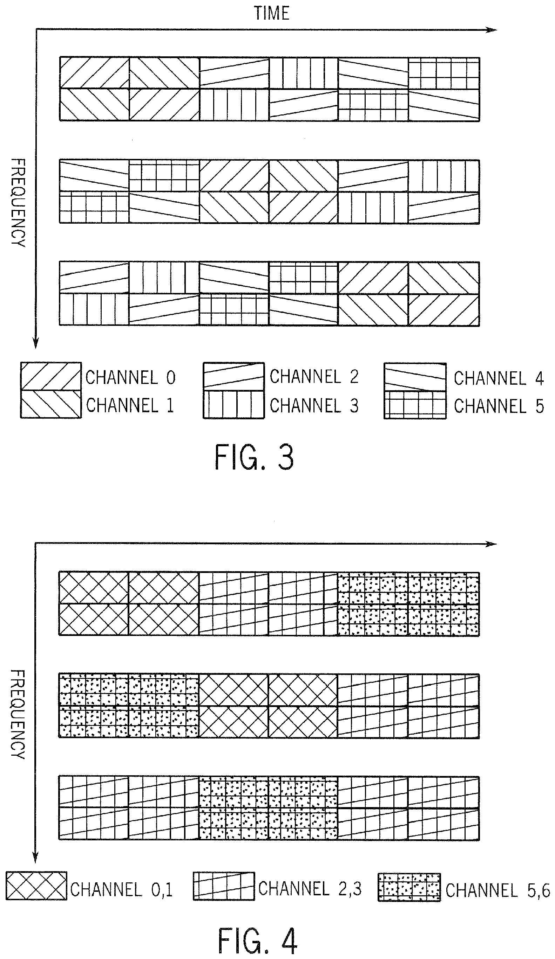

The control channel permutation (Figure 5, block 40) may be accomplished as follows. As shown in Figures 2 and 3, each HARQ ACK channel includes three HARQ units. Each HARQ unit consists of one sub-carrier by two OFDM symbols. There exist two methods to map one HARQ unit to physical sub-carriers, as described in Figures 2 and 3.

The HARQ ACK channel permutation can be generalized as follows. Firstly, index the sub-carrier of one HARQ channel as Figure 6. The 36 sub-carriers of one HARQ channel are indexed as $P_i$, $0 \leq i < 36$, where i is sub-carrier index. $P_i$ can be rewritten as $P_{12m+2l+k}, 0 \leq m < 3, 0 \leq l < 6, 0 \leq k < 2$, where m is the FMT index, l is OFDM symbol index and k is the sub-carrier index of one OFDM symbol of one 2x6 FMT.

The total 36 sub-carriers can be further divided into 18 units, each having 1 sub-carrier by 2 contiguous OFDM symbols. There are two types of units, as shown in Figures 2 and 3, respectively. The unit shown in Figure 2 is denoted as Type 1 unit hereafter. The unit shown in Figure 3 is denoted as Type 2 unit hereafter. For the two types of units, there are in total 36 unit positions. The position of one unit can be described by the positions of two sub-carriers.

$Q_j = (Q_j^0, Q_j^1), 0 \leq j < 36$, < 36, where j is unit index, $Q_j^s, 0 \leq s < 2$ is the sub-carrier position of $s^{th}$ sub-carrier of unit j. The first 18 units are Type 1 units and the sub-carrier positions can be written as equation (1):

$$\begin{cases} Q_j^0 = P_{12 \cdot \lfloor j/6 \rfloor + 4 \cdot \lfloor (j \bmod 6)/2 \rfloor + (j \bmod 6) \bmod 2} \\ Q_j^1 = P_{12 \cdot \lfloor j/6 \rfloor + 2 \cdot (2 \cdot \lfloor (j \bmod 6)/2 \rfloor + 1) + (j \bmod 6) \bmod 2} \end{cases} \quad 0 \leq j < 18 \qquad (1)$$

The remaining 18 units are for the Type 2 units and the sub-carrier positions can be written as equation 2 shown as below:

$$\begin{cases} Q_j^0 = P_{12 \cdot \lfloor (j-18)/6 \rfloor + 4 \cdot \lfloor ((j-18) \bmod 6)/2 \rfloor + ((j-18) \bmod 6) \bmod 2} \\ Q_j^1 = P_{12 \cdot \lfloor (j-18)/6 \rfloor + 2 \cdot (2 \cdot \lfloor ((j-18) \bmod 6)/2 \rfloor + 1) + 1 - ((j-18) \bmod 6) \bmod 2} \end{cases} \quad 18 \leq j < 36 \qquad (2)$$

The sub-carrier positions of 6 HARQ ACK channels can be described using 3 units $R_n = (Q_{j_{n,0}}, Q_{j_{n,1}}, Q_{j_{n,2}}), 0 \leq n < 6$, where $Q_{j_{n,m}} \in \{Q_j\}, 0 \leq m < 3, 0 \leq j < 36$.

There are in total 64 positions for the $0^{th}$ HARQ ACK channel and it can be defined as below equation:

$$R_0 \in \left\{ \left( Q_{\{0,18\}}, Q_{\{8,9,24,25\}}, Q_{\{16,17,34,35\}} \right), \left( Q_{\{0,18\}}, Q_{\{14,15,32,33\}}, Q_{\{10,11,28,29\}} \right) \right\} \tag{3}$$

Denote the first half of $R_0$ as $\Psi_0' = \left\{ \left( Q_{\{0,18\}}, Q_{\{8,9,24,25\}}, Q_{\{16,17,34,35\}} \right) \right\}$ and the second half of $R_0$ as $\Psi_0'' = \left\{ \left( Q_{\{0,18\}}, Q_{\{14,15,32,33\}}, Q_{\{10,11,28,29\}} \right) \right\}$. The positions of the rest of the HARQ ACK channels depend on the positions of the first HARQ ACK channel:

If $R_0 \in \Psi_0'$, the positions of the second and fourth HARQ ACK channels can be written as below two equations:

$$R_0 \in \Psi_2' = \left\{ \left( Q_{\{6,24\}}, Q_{\{14,15,30,31\}}, Q_{\{4,5,22,23\}} \right) \right\} \tag{4}$$

$$R_4 \in \Psi_4' = \left\{ \left( Q_{\{12,30\}}, Q_{\{2,3,20,21\}}, Q_{\{10,11,28,29\}} \right) \right\} \tag{5}$$

Otherwise, if $R_0 \in \Psi_0''$, the positions of the second and fourth HARQ ACK channels can be written as below two equations:

$$R_2 \in \Psi_2'' = \left\{ \left( Q_{\{6,24\}}, Q_{\{2,3,20,21\}}, Q_{\{16,17,34,35\}} \right) \right\} \tag{6}$$

$$R_4 \in \Psi_4'' = \left\{ \left( Q_{\{12,30\}}, Q_{\{8,9,26,27\}}, Q_{\{4,5,22,23\}} \right) \right\} \tag{7}$$

The positions of the three odd HARQ ACK channels can be inferred from the positions of three even HARQ ACK channels:

$$R_{2u+1} = \left( Q_{j_{2u+1,0}}, Q_{j_{2u+1,1}}, Q_{j_{2u+1,2}} \right), 0 \le u < 3 \tag{8}$$

where $j_{2u+1,m} = \lfloor j_{2u,m}/2 \rfloor \times 4 + 1 - j_{2u,m}, 0 \le u < 3, 0 \le m < 3$ So, in total for one type of unit, there are 65536 types of HARQ ACK channel permutation patterns in one HARQ ACK channel. One HARQ ACK channel permutation pattern can be uniquely represented by one index S where $0 \le S < 2^{16}$. S can be represented in binary as $a_0, a_1, a_2, ..., a_{15}$. The first bit $a_0$ is subset selection bit.

If $a_0 = 0$ $R_0 \in \Psi_0'$, $R_2 \in \Psi_2'$, $R_4 \in \Psi_4'$ Else $R_0 \in \Psi_0''$, $R_2 \in \Psi_2''$, $R_4 \in \Psi_4''$ End.

The following 5 bits $a_1, a_2, ..., a_5$ can be used to describe the positions of HARQ ACK channel O. When the permutation pattern index $a_1, a_2, ..., a_5$ = '00000', the permutation pattern is selected by the first combination of $\Psi_0'$ or $\Psi_0''$, e.g. $R_0 = (Q_0, Q_8, Q_{16})$ or $R_0 = (Q_0, Q_{14}, Q_{10})$. If the permutation pattern index $a_1, a_2, ..., a_5$ = '00001', the permutation pattern is selected by the second combination of $\Psi_0'$ or $\Psi_0''$, e.g. $R_0 = (Q_0, Q_8, Q_{17})$ or $R_0 = (Q_0, Q_{14}, Q_{11})$. Similarly, bits $a_6, a_7, ..., a_{10}$ and $a_{11}, a_{12}, ..., a_{15}$ are used to describe the positions of HARQ ACK channels 2 and 4 in a similar way, respectively.

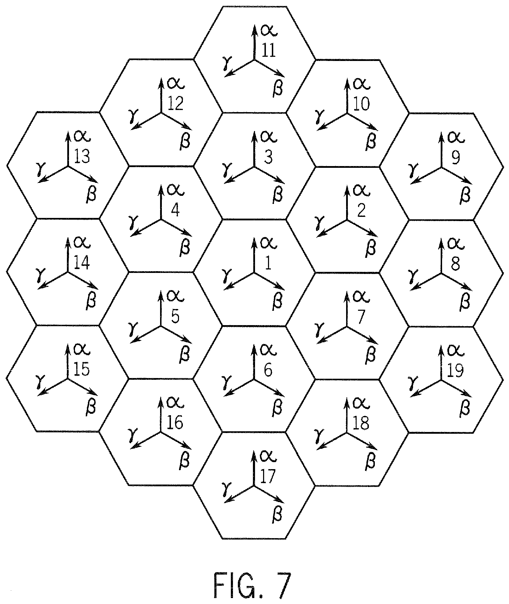

For a given section, S can change in time and the changing patterns for different sectors can be different to maximize interference randomization. One example of changing pattern of S is a pseudo random number with sector specific random number state. Or S can be planned among sectors. The planning of S can be done by planning the 16 bits of HARQ channel permutation pattern. One example of planning uses a network example, given in Figure 7. The network is comprised of 19 cells with index c and a cell identifier (CID), where $1 \le cid \le 19$. And each cell has three sectors $\alpha$, $\beta$ and $\gamma$. The sectors can be indexed globally as below:

$$\begin{cases} sid = (cid - 1) \cdot 3 & \alpha \sec tor \\ sid = (cid - 1) \cdot 3 + 1 & \beta \sec tor \\ sid = (cid - 1) \cdot 3 + 2 & \gamma \sec tor \end{cases} \tag{9}$$

$a_0 = sid \bmod 2$

$a_1, a_2, ..., a_5$ can be planned according to a table:

[23 30 7 20 24 14 26 29 25 128 21 15 18 9 6 3 27 2 10 13 31 5 11 22 8 4 19 17 12 16 0] and the reuse distance is 32. For a given sector, $a_1, a_2, ..., a_5$ should be the index $sid \bmod 32$ in above table.

$a_6, a_7, ..., a_{10}$ and $a_{11}, a_{12}, ... a_{15}$ can be planned accordingly.

For TDM/FDM/CDM method, there is one method to map one HARQ unit to physical sub-carriers as shown in Figure 4. For the TDM/FDM/CDM method, the total 36 sub-carriers can be further divided into 9 units each having two sub-carriers by two continuous OFDM symbols. The position of one unit can be described by positions of four sub-carriers. $Q_j = \left( Q_j^0, Q_j^1, Q_j^2, Q_j^3 \right), 0 \le j < 9$, where j is unit index, $Q_j^s, 0 \le s < 4$ is sub-carrier position of $s^{th}$ sub-carrier of unit j. There is only one type of unit, as shown in Figure 4. The sub-carrier position of TDM/FDM/CDM unit can be written as equation (10) shown as below:

$$Q_j^s = P_{12 \cdot \lfloor j/3 \rfloor + 4 \cdot (j \bmod 3) + s}, 0 \le j < 9, 0 \le s < 4 \tag{10}$$

There are in total two unit indexes for the first two HARQ ACK channel and it can be defined as below equation:

$$R_0 = R_1 \in \{(Q_0, Q_4, Q_8), (Q_0, Q_7, Q_5)\} \tag{11}$$

If $R_0 = (Q_0, Q_4, Q_8)$, the positions of the rest of the four HARQ ACK channels can be described as below two equations:

$$R_2 = R_3 = (Q_3, Q_7, Q_2) \tag{12}$$

$$R_4 = R_5 = (Q_6, Q_1, Q_5) \tag{13}$$

If $R_0 = (Q_0, Q_7, Q_5)$, the positions of the rest of the four HARQ ACK channels can be described as below two equations:

$$R_2 = R_3 = (Q_3, Q_1, Q_8) \tag{14}$$

$$R_4 = R_5 = (Q_6, Q_4, Q_2) \tag{15}$$

So, in total for one type of unit, there are two types of HARQ ACK channel permutation patterns in one HARQ ACK channel. One bit is enough to describe the ACK channel permutation.

The HARQ sub-channel index permutation (Figure 5, block 44) may be done as follows. When one mobile station is allocated one HARQ ACK channel, it will be allocated with a logical HARQ ACK channel index. We denote the logical ACK channel index as k, where k's range may be decided by a ACK logical index pool of a specific subframe. The mapping between the logical HARQ ACK channel index to a physical HARQ ACK channel index might change with time and the changing pattern is cell specific. For one ACK region, there are in total 720 channel index permutations. For each channel index permutation, the mapping from logical ACK channel index to physical ACK channel index is different. One example is each sector will change the permutation pattern according to a pseudo-random number between 0 and 719. And the random number state in each sector is different.

Alternatively, the channel index can be planned if there is enough information to perform inter sector coordination.

Using the network example in Figure 7, we can write the channel permutation as a function as below:

$$PhyChanId = (LogChanId + sid * 2) \bmod 6 \tag{16}$$

This equation assumes, upon allocation of logical ACK channel index, each base station will allocate from lowest available logical ACK channel index or highest available logical ACK channel index. Then when load is low, inter-cell ACK interference can be orthogonal in time-frequency domain.

The HARQ sequence permutation (Figure 5, block 46) is as follows. The sequence used to send ACK and NAK signal in a physical HARQ ACK channel can be defined as ACK as $[1,e^{j\theta}]$ and NAK as $[1,-e^{j\theta}]$, where $\theta$ can change with time and unit and the changing pattern is cell specific. One example is $\theta \in \{0,\pi/4,\pi/2,3\pi/4,\pi,5\pi/4,3\pi/2,7\pi/4\}$ and the phase index is a pseudo random number and the state is sector specific. Or it can be planned if there is enough information to perform inter sector coordination. Using the network example in Figure 7, the phase index can be defined as below equation:

$$PhaseIdx = sid \bmod 8$$

In some embodiments, the sequence depicted in Figure 5 may be implemented in firmware, software, or hardware. In a hardware implemented embodiment, it may be implemented by the HARQ unit 30 of Figure 1. In a software implemented embodiment, it may be implemented by computer readable instructions executed by a computer, such as the controller 28 and stored in a suitable storage medium, such as a magnetic, optical, or semiconductor memory. That memory could be part of the HARQ unit 30 in Figure 1 or the controller 28, as two examples.

In some embodiments, the radios depicted herein as the base station and the mobile station can include one or more than one antennae. In one embodiment, the mobile station and the base station may include one transmit antenna and two receive antennas. References throughout this specification to "one embodiment" or "an embodiment" mean that a particular feature, structure, or characteristic described in connection with the embodiment is included in at least one implementation encompassed within the present invention. Thus, appearances of the phrase "one embodiment" or "in an embodiment" are not necessarily referring to the same embodiment. Furthermore, the particular features, structures, or characteristics may be instituted in other suitable forms other than the particular embodiment illustrated and all such forms may be encompassed within the claims of the present application.

While the present invention has been described with respect to a limited number of embodiments, those skilled in the art will appreciate numerous modifications and variations therefrom. It is intended that the appended claims cover all such modifications and variations as fall within the scope of this present invention as defined by the claims.

**Claims**

**1.**   A method comprising:

using frequency hopping for a wireless communication;
randomizing inter cell interference for a hybrid automatic repeat request, HARQ, acknowledgement channel using frequency hopping; and
using time or frequency division multiplexing for said wireless communication;
using a hybrid automatic repeat request channel that includes three HARQ channel units, each unit including one sub-carrier with two orthogonal frequency division multiplexed symbols, wherein each sub-carrier is indexed;
**characterized in that**
the inter cell interference is randomized on two levels:

a first level (40) in which the HARQ channel units of different cell sectors are permuted to different frequency-time locations; and
a second level (42) inside an uplink HARQ feedback region including varying:

the HARQ acknowledge channel mapping and the HARQ acknowledge channel indexing (44); and
the HARQ acknowledge channel sequence (46),

said HARQ feedback region comprising three feedback mini-tiles, FMT, each comprising two sub-carriers by six OFDM symbols.

2. The method of claim 1 including using frequency hopping in an acknowledgement channel also using code division multiplexing.

3. The method of claim 1 including mapping one hybrid automatic repeat request unit to physical sub-carriers.

4. The method of claim 1 including representing the hybrid automatic repeat request channel permutation patterns by one index S where zero is less than or equal to S and S is less than or equal to $2^{16}$.

5. The method of claim 4, including allowing S to change in time such that the change patterns for different sectors can be different to maximize interference randomization.

6. The method of claim 4, including planning S among sectors.

7. A computer readable medium storing instructions to enable a computer to perform the method of any of claims 1 to 6.

8. A mobile station (12) comprising:

a unit (30) adapted to use frequency hopping to randomize inter cell interference for a hybrid automatic repeat request, HARQ, acknowledgement channel using time or frequency division multiplexing;
a receiver (18) coupled to said unit; and
a transmitter (38) coupled to said unit;
said unit (30) adapted to use a hybrid automatic repeat request channel that includes three HARQ channel units, each HARQ channel unit including one sub-carrier with two orthogonal frequency division multiplexed signals, wherein each sub-carrier is indexed;
**characterised in that** the unit (30) is arranged to randomize inter cell interference on two levels:

a first level (40) in which the HARQ channel units of different cell sectors are permuted to different frequency-time locations;
a second level (42) inside an uplink HARQ feedback region including varying:

the HARQ acknowledge channel mapping and the HARQ acknowledge channel indexing (44); and
the HARQ acknowledge channel sequence (46),

said HARQ feedback region comprising three feedback mini-tiles, FMT, each comprising two sub-carriers by six OFDM symbols.

9. The mobile station of claim 8, wherein said unit is a hybrid automatic repeat request acknowledgement buffer (30), or a controller (28).

10. The mobile station of claim 9, including a hybrid automatic repeat request buffer (30) coupled to a symbol modulator (34) and an encoder (32) on a radio frequency transmit side and a symbol demodulator (22) and an error checker (26) in a radio frequency receive side.

11. The mobile station of claim 8, wherein said mobile station uses code division multiplexing.

12. The mobile station of claim 8, said unit to map one hybrid automatic repeat request unit to a physical sub-carrier.

**Patentansprüche**

1. Verfahren, das Folgendes umfasst:

Verwenden eines Frequenzsprungverfahrens für eine drahtlose Kommunikation;
Randomisieren einer Zwischenzellenstörung für einen Quittierungskanal für automatische Hybrid-Wiederholungsanforderung, HARQ-Quittierungskanal, unter Verwendung des Frequenzsprungverfahrens; und
Verwenden des Zeit- oder Frequenzmultiplexverfahrens für die drahtlose Kommunikation;

Verwenden eines Kanals für automatische Hybrid-Wiederholungsanforderung, der drei HARQ-Kanaleinheiten enthält, wobei jede Einheit einen Unterträger mit zwei orthogonalen frequenzmultiplexierten Symbolen enthält, wobei jeder Unterträger indexiert ist;
**dadurch gekennzeichnet, dass**
die Zwischenzellenstörung auf zwei Ebenen randomisiert wird:

einer ersten Ebene (40), in der die HARQ-Kanaleinheiten unterschiedlicher Zellensektoren auf unterschiedliche Frequenz-Zeit-Orte permutiert werden; und
einer zweiten Ebene (42) in einem Aufwärtsstrecken-HARQ-Rückkopplungsbereich, einschließlich des Variierens:

der HARQ-Quittierungskanal-Abbildung und der HARQ-Quittierungskanal-Indexierung (44); und
der HARQ-Quittierungskanal-Sequenz (46),

wobei der HARQ-Rückkopplungsbereich drei Rückkopplungs-Minikacheln (FMT) enthält, wovon jede zwei Unterträger mit sechs OFDM-Symbolen enthält.

2. Verfahren nach Anspruch 1, wobei das Verwenden des Frequenzsprungverfahrens in einem Quittierungskanal auch das Codemultiplexverfahren verwendet.

3. Verfahren nach Anspruch 1, das das Abbilden einer Einheit für automatische Hybrid-Wiederholungsanforderung auf physikalische Unterträger umfasst.

4. Verfahren nach Anspruch 1, das das Darstellen der Kanalpermutationsmuster der automatischen Hybrid-Wiederholungsanforderung durch einen Index S umfasst, wobei null kleiner oder gleich S und S kleiner oder gleich $2^{16}$ ist.

5. Verfahren nach Anspruch 4, das zulässt, dass sich S zeitlich ändert, derart, dass die Änderungsmuster für unterschiedliche Sektoren unterschiedlich sein können, um die Störungsrandomisierung maximal zu machen.

6. Verfahren nach Anspruch 4, das das Planen von S Untersektoren umfasst.

7. Computerlesbares Medium, das Befehle speichert, um einem Computer zu ermöglichen, das Verfahren nach einem der Ansprüche 1 bis 6 auszuführen.

8. Mobilstation (12), die Folgendes umfasst:

eine Einheit (30), die dafür ausgelegt ist, ein Frequenzsprungverfahren zu verwenden, um eine Zwischenzellenstörung für einen Quittierungskanal für automatische Hybrid-Wiederholungsanforderung, HARQ-Quittierungskanal, unter Verwendung eines Zeit- oder Frequenzmultiplexverfahrens zu randomisieren;
einen Empfänger (18), der mit der Einheit gekoppelt ist; und
einen Sender (38), der mit der Einheit gekoppelt ist;
wobei die Einheit (30) dafür ausgelegt ist, einen Kanal für automatische Hybrid-Wiederholungsanforderung zu verwenden, der drei HARQ-Kanaleinheiten enthält, wobei jede HARQ-Kanaleinheit einen Unterträger mit zwei orthogonalen frequenzmultiplexierten Signalen enthält, wobei jeder Unterträger indexiert ist;
**dadurch gekennzeichnet, dass** die Einheit (30) dafür ausgelegt ist, Zwischenzellenstörungen auf zwei Ebenen zu randomisieren:

einer ersten Ebene (40), in der die HARQ-Kanaleinheiten verschiedener Zellensektoren auf unterschiedliche Frequenz-Zeit-Orte permutiert werden; und
einer zweiten Ebene (42) in einem Aufwärtsstrecken-HARQ-Rückkopplungsbereich, einschließlich des Variierens:

der HARQ-Quittierungskanal-Abbildung und der HARQ-Quittierungskanal-Indexierung (44); und
der HARQ-Quittierungskanal-Sequenz (46),

wobei der HARQ-Rückkopplungsbereich drei Rückkopplungs-Minikacheln, FMT, enthält, wovon jede zwei Unterträger mit sechs OFDM-Symbolen enthält.

**9.** Mobilstation nach Anspruch 8, wobei die Einheit ein Quittierungspuffer (30) für automatische Hybrid-Wiederholungsanforderung oder eine Steuereinheit (28) ist.

**10.** Mobilstation nach Anspruch 9, die einen Puffer (30) für automatische Hybrid-Wiederholungsanforderung enthält, der mit einem Symbolmodulator (34) und einem Codierer (32) auf einer Funkfrequenz-Sendeseite und mit einem Symboldemodulator (22) und einer Fehlerprüfeinrichtung (26) auf einer Funkfrequenz-Empfangsseite gekoppelt ist.

**11.** Mobilstation nach Anspruch 8, wobei die Mobilstation ein Codemultiplexverfahren verwendet.

**12.** Mobilstation nach Anspruch 8, wobei die Einheit eine Einheit für automatische Hybrid-Wiederholungsanforderung auf einen physikalischen Unterträger abbildet.

**Revendications**

**1.** Procédé comprenant les étapes suivantes :

utiliser des sauts de fréquence pour une communication sans fil ;
randomiser les interférences entre cellules pour un canal d'accusé de réception de demande de répétition automatique hybride, HARQ, utilisant des sauts de fréquence ;
utiliser un multiplexage par répartition en temps ou en fréquence pour ladite communication sans fil ;
utiliser un canal de demande de répétition automatique hybride qui comprend trois unités de canal HARQ, chaque unité comprenant une sous-porteuse avec deux symboles multiplexés par répartition orthogonale de la fréquence, où chaque sous-porteuse est indexée ;
**caractérisé en ce que**
les interférences entre cellules sont randomisées sur deux niveaux :

un premier niveau (40) où les unités de canal HARQ de différents secteurs de cellules sont permutées vers différents emplacements fréquence-temps ; et
un second niveau (42) à l'intérieur d'une région de retour d'informations HARQ de liaison montante comprenant de faire varier :

le mappage de canal d'accusé de réception HARQ et l'indexation de canal d'accusé de réception HARQ (44) ; et
la séquence de canal d'accusé de réception HARQ (46),

ladite région de retour d'informations HARQ comprenant trois mini-tuiles de retour d'informations, FMT, chacune comprenant deux sous-porteuses de six symboles OFDM.

**2.** Procédé selon la revendication 1, comprenant d'utiliser des sauts de fréquence dans un canal d'accusé de réception utilisant également un multiplexage par répartition de code.

**3.** Procédé selon la revendication 1, comprenant de mapper une unité de demande de répétition automatique hybride à des sous-porteuses physiques.

**4.** Procédé selon la revendication 1, comprenant de représenter des motifs de permutation de canal de demande de répétition automatique hybride par un index S où zéro est inférieur ou égal à S, et S est inférieur ou égal à $2^{16}$.

**5.** Procédé selon la revendication 4, comprenant de permettre à S de changer dans le temps, de manière à ce que les motifs de changement pour différents secteurs puissent être différents pour maximiser une randomisation des interférences.

**6.** Procédé selon la revendication 4, comprenant de planifier S entre les secteurs.

**7.** Support lisible par ordinateur stockant des instructions pour permettre à un ordinateur d'exécuter le procédé de l'une quelconque des revendications 1 à 6.

**8.** Station mobile (12) comprenant :

une unité (30) adaptée pour utiliser des sauts de fréquence pour randomiser les interférences entre cellules pour un canal d'accusé de réception de demande de répétition automatique hybride, HARQ, utilisant un multiplexage par répartition dans le temps ou en fréquence ;

un récepteur (18), couplé à ladite unité ; et

un émetteur (38) couplé à ladite unité ;

ladite unité (30) étant adaptée pour utiliser un canal de demande de répétition automatique hybride qui comprend trois unités de canal HARQ, chaque unité de canal HARQ comprenant une sous-porteuse avec deux signaux multiplexés par répartition orthogonale de la fréquence, où chaque sous-porteuse est indexée ;

**caractérisée en ce que** l'unité (30) est arrangée pour randomiser les interférences entre cellules sur deux niveaux :

un premier niveau (40) où les unités de canal HARQ de différents secteurs de cellules sont permutées vers différents emplacements fréquence-temps ;

un second niveau (42) à l'intérieur d'une région de retour d'informations HARQ de liaison montante comprenant de faire varier :

le mappage de canal d'accusé de réception HARQ et l'indexation de canal d'accusé de réception HARQ (44) ; et

la séquence de canal d'accusé de réception HARQ (46),

ladite région de retour d'informations HARQ comprenant trois mini-tuiles de retour d'informations, FMT, chacune comprenant deux sous-porteuses de six symboles OFDM.

9. Station mobile selon la revendication 8, dans laquelle ladite unité est une mémoire tampon d'accusé de réception de demande de répétition automatique hybride (30), ou un contrôleur (28).

10. Station mobile selon la revendication 9, comprenant une mémoire tampon de demande de répétition automatique hybride (30) couplée à un modulateur de symbole (34) et à un encodeur (32) d'un côté transmission radiofréquence et à un démodulateur de symbole (22) et à un contrôleur d'erreur (26) d'un côté réception radiofréquence.

11. Station mobile selon la revendication 8, dans laquelle ladite station mobile utilise un multiplexage par répartition de code.

12. Station mobile selon la revendication 8, dans laquelle ladite station mobile mappe une unité de demande de répétition automatique hybride à une sous-couche physique.

FIG. 1

EP 2 374 236 B1

FIG. 2

FIG. 3

FIG. 4

FIG. 5

| CONTROL CHANNEL PERMUTATION | 40 |
| HARQ SUB CHANNEL PERMUTATION | 42 |
| HARQ SUB CHANNEL INDEX PERMUTATION | 44 |
| HARQ SEQUENCE PERMUTATION | 46 |

TIME

FREQUENCY

| $P_0$ | $P_2$ | $P_4$ | $P_6$ | $P_8$ | $P_{10}$ |
|---|---|---|---|---|---|
| $P_1$ | $P_3$ | $P_5$ | $P_7$ | $P_9$ | $P_{11}$ |

| $P_{12}$ | $P_{14}$ | $P_{16}$ | $P_{18}$ | $P_{20}$ | $P_{22}$ |
|---|---|---|---|---|---|
| $P_{13}$ | $P_{15}$ | $P_{17}$ | $P_{19}$ | $P_{21}$ | $P_{23}$ |

| $P_{24}$ | $P_{26}$ | $P_{28}$ | $P_{30}$ | $P_{32}$ | $P_{34}$ |
|---|---|---|---|---|---|
| $P_{25}$ | $P_{27}$ | $P_{29}$ | $P_{31}$ | $P_{33}$ | $P_{35}$ |

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2007097927 A
- EP 1863215 A
- US 2008165743 A

### Non-patent literature cited in the description

- Data-non-assisted control signal transmission without UL data. **NOKIA et al.** 3GPP Draft; R1-071676, 3rd Generation Partnership Project (3GPP). Mobile Competence Centre, 03 April 2007